# EUROPÄISCHE PATENTANMELDUNG

(11) **EP 1 610 157 A1**
(43) Veröffentlichungstag der Anmeldung: **28.12.2005**
(21) Anmeldenummer: 05011058.4
(22) Anmeldetag: 21.05.2005
(51) Int. Cl.: G02B 6/00, B60Q 1/00, F21S 8/10

(54) **Beleuchtungseinrichtung für ein Fahrzeug mit einem stabförmigen Lichtleiter**

(30) Priorität: 25.06.2004 DE 102004030725
(71) Anmelder: MAN Nutzfahrzeuge Aktiengesellschaft, 80995 München (DE)
(72) Erfinder: Eisermann, Günter, 85757 Karlsfeld (DE)

(57) **Zusammenfassung**

Beleuchtungseinrichtung für ein Fahrzeug, insbesondere Nutzfahrzeug, mit einem Gehäuse, dessen Lichtaustrittsöffnung von einer lichtdurchlässigen Abdeckscheibe verschlossen ist und in welchem wenigstens ein Scheinwerfer und wenigstens ein an eine Lichtquelle angekoppeltes, im wesentlichen stabförmiges Lichtleitelement angeordnet sind, wobei zumindest aus einem Teil der Mantelfläche des Lichtleitelementes Licht austritt, dadurch gekennzeichnet, dass das Lichtleitelement (5) bei im Fahrzeug verbautem Zustand in seiner Längsausdehnung im wesentlichen horizontal ober- oder unterhalb der in einer horizontalen Anordnung vorgesehenen Scheinwerfer (2, 3, 4) angeordnet ist.

## Beschreibung

Die Erfindung betrifft eine Beleuchtungseinrichtung für ein Fahrzeug, insbesondere Nutzfahrzeug, gemäß dem Oberbegriff des Patentanspruches 1.

Eine derartige, beispielsweise aus DE 196 52 159 A1 bekannte Beleuchtungseinrichtung beinhaltet ein Gehäuse, dessen Lichtaustrittsöffnung von einer lichtdurchlässigen Abdeckscheibe verschlossen ist und in welchem wenigstens ein Scheinwerfer angeordnet ist. Hierdurch wird beispielsweise die Frontbeleuchtung des Fahrzeugs an einer Fahrzeugseite gebildet. Ferner beinhaltet die bekannte Beleuchtungseinrichtung ein an eine Lichtquelle angekoppeltes, im wesentlichen stabförmiges Lichtleitelement. Zur Bildung eines Stand-/Begrenzungslichtes tritt aus wenigstens einem Teil der Mantelfläche des Lichtleitelementes Licht aus.

Aufgabe der Erfindung ist es, eine Beleuchtungseinrichtung der eingangs genannten Art zu schaffen, bei welcher eine raumsparende Anordnung des im wesentlichen stabförmigen Lichtleitelementes innerhalb der als Scheinwerfersystem dienenden Beleuchtungseinrichtung des Fahrzeugs erreicht wird.

Diese Aufgabe wird erfindungsgemäß durch die kennzeichnenden Merkmale des Patentanspruches 1 gelöst.

Bei der Erfindung wird das im wesentlichen stabförmig ausgebildete Lichtleitelement in seiner Längsausdehnung im wesentlichen horizontal oberhalb oder unterhalb der in einer horizontalen Anordnung vorgesehenen Scheinwerfer der Beleuchtungseinrichtung angeordnet. Unterhalb der horizontalen Scheinwerferanordnung kann mit separater oder mit der gleichen Abdeckscheibe im Gehäuse ein Blinker angeordnet sein, wobei das stabförmige Lichtleitelement dann vorzugsweise zwischen den horizontal angeordneten Scheinwerfern und dem sich horizontal erstreckenden Blinker angeordnet wird.

An einem oder an beiden Enden des stabförmigen Lichtleitelementes kann je eine Lichtquelle vorgesehen sein, deren Licht eingekoppelt wird. Bei den Lichtquellen kann es sich um herkömmliche Glühbirnen oder Leuchtdioden handeln. Vorzugsweise ist nur eine Lichtquelle je Lichtleitelement vorgesehen und das Lichtleitelement ist in der die Scheinwerfer und gegebenenfalls auch den Blinker enthaltenden flüssigkeitsdichten Fassung flüssigkeitsdicht eingesetzt und befestigt.

Für eine homogene Lichtabstrahlung über die gesamte Länge des Lichtleitelementes hin ist an einem Mantelteil des Lichtleitelementes eine Oberflächenstruktur vorgesehen, über welche das eingekoppelte Licht aus dem Lichtleitelement wieder nach außen als Streulicht ausgekoppelt wird. Diese Oberflächenstruktur weist vorzugsweise sägezahnförmige Strukturelemente auf, wobei benachbarte Strukturflächen der Strukturelemente einen Winkel von 90° einschließen. Eine homogene Lichtabstrahlung wird noch dadurch begünstigt, dass die sägezahnförmige Oberflächenstruktur, ausgehend von ihrem der Lichtquelle benachbarten Ende, sich entlang der Längsausdehnung des Lichtelementes in ihrer Breite vergrößert. Wenn an einem Ende des Lichtleitelementes mittels einer Lichtquelle Licht eingekoppelt wird, vergrößert sich die Breite der Oberflächenstruktur entlang der gesamten Längsausdehnung des Lichtleitelementes zum anderen Ende hin. Damit wird eine etwa gleichmäßige Lichtausleitung aus dem Lichtleitelement erreicht.

Weiterhin ist gegenüber den sägezahnähnlichen Strukturelementen ein Reflektor angeordnet, der, über seine Längsausdehnung gesehen zum einen ein annähernd gleiches Streulicht abstrahlt und zum anderen Licht in das Lichtleitelement zurück reflektiert, das seinerseits dann über seine glatte Fläche, dem Reflektor abgewandte Fläche, Licht abstrahlt.

Das lichtabstrahlende Lichtleitelement bildet in der vorzugsweise als Frontbeleuchtung des Fahrzeugs ausgebildeten Beleuchtungseinrichtung ein Standlicht oder gegebenenfalls ein Begrenzungslicht.

Anhand der Figuren wird an einem Ausführungsbeispiel die Erfindung noch näher erläutert.

Es zeigt
- Fig. 1: in Frontansicht eine als Frontbeleuchtung an einer Fahrzeugseite ausgebildete Beleuchtungseinrichtung als Ausführungsbeispiel;
- Fig. 2: eine schnittbildliche Ansicht des Ausführungsbeispiels der Fig. 1 von oben;
- Fig. 3: eine schnittbildliche Ansicht des Ausführungsbeispiels der Fig. 1 entlang der in Fig. 1 strichpunktiert angedeuteten Schnittlinie;
- Fig. 3a: eine Vergrößerung der Anordnung des Lichtleitelementes aus Fig. 3, mit Strahlengang;
- Fig. 4: ein im Ausführungsbeispiel der Fig. 1 eingebautes Lichtleitelement an seiner Rückseite;
- Fig. 5: das in Fig. 4 dargestellte Lichtleitelement in einer Ansicht von oben;
- Fig. 6: einen vergrößerten Abschnitt V des in Fig. 5 dargestellten Lichtleitelementes; und
- Fig. 7: eine vergrößerte Ansicht am mit W in Fig. 4 bezeichneten Lichteinkopplungsende des Lichtleitelementes.

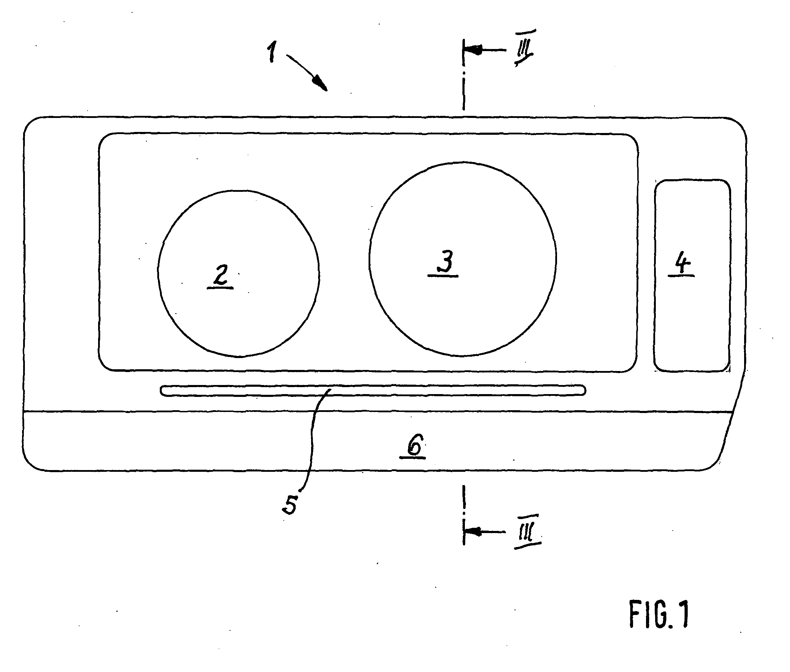

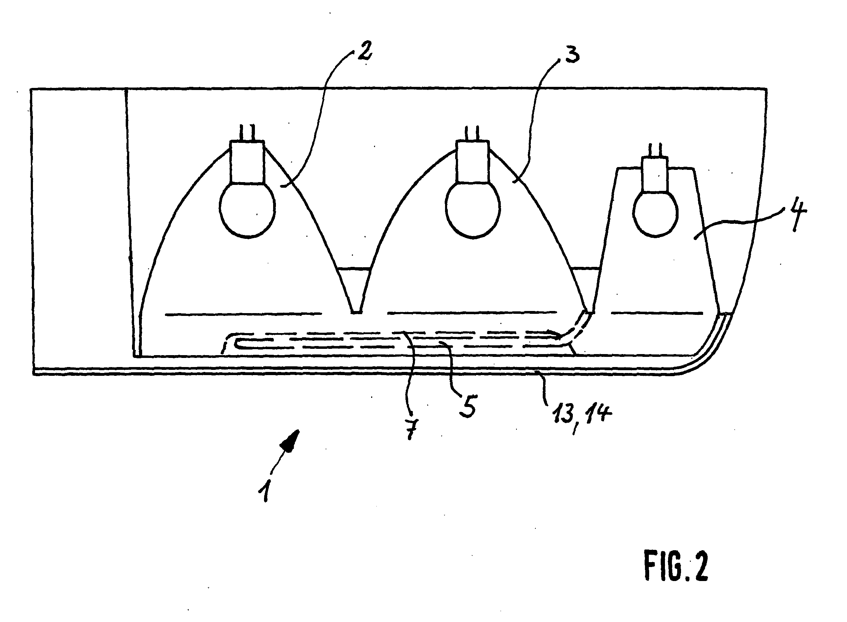

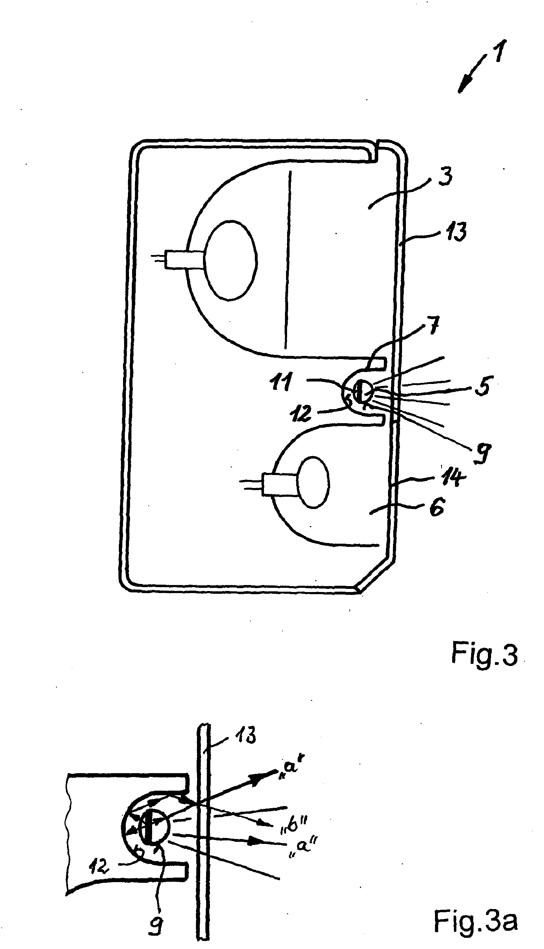

Die in den Fig. 1 bis 3 dargestellte Beleuchtungseinrichtung dient insbesondere als Frontbeleuchtung eines Nutzfahrzeugs. In einem Gehäuse 1 befinden sich in horizontaler Anordnung die Scheinwerfer 2, 3 und 4, die von einer lichtdurchlässigen Abdeckscheibe 13 (Fig. 3) verschlossen sind. Unterhalb der horizontalen Scheinwerferanordnung befindet sich beispielsweise mit separater Abdeckscheibe 14 oder gleicher Abdeckscheibe 13 ein Blinker 6, der länglich ausgebildet ist und sich unterhalb und im wesentlichen über die gesamte Länge der horizontalen Scheinwerferanordnung bzw. der Beleuchtungseinrichtung erstreckt, wie aus der Fig. 1 zu ersehen ist. Die Scheinwerfer 2, 3 und 4 sowie der Blinker 6 sind in bekannter Weise ausgebildet und beinhalten Glühbirnen, die innerhalb von Reflektoren angeordnet sind.

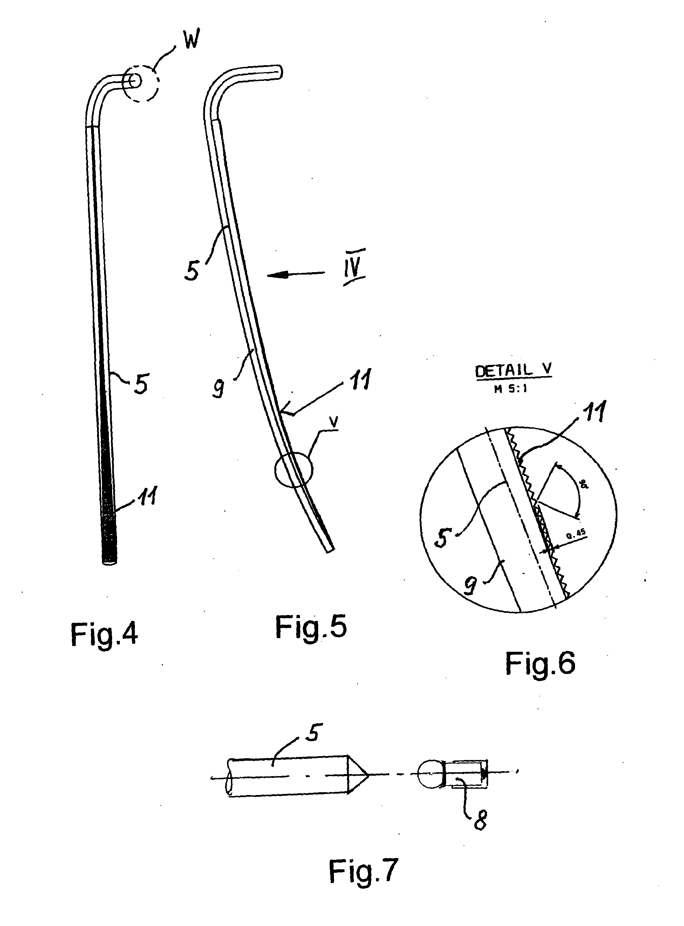

Zwischen dem Blinker 6 und der horizontalen Scheinwerferanordnung ist ein stabförmiges Lichtleitelement 5 angeordnet. Dieses Lichtleitelement 5 ist vorzugsweise als massiver Lichtleitstab ausgebildet. An einem der beiden Enden des Lichtleitelements 5 wird von einer Lichtquelle 8 (Fig. 7), die als Leuchtdiode, Glühbirne oder sonst wie in bekannter Weise ausgebildet sein kann, Licht in das stabförmige Lichtleitelement 5 eingekoppelt. Es kann auch an beiden Enden des Lichtleitelementes 5 Licht eingekoppelt werden.

Es ist auch möglich, das Lichtleitelement 5 oberhalb der horizontalen Anordnung der Scheinwerfer 2, 3 und 4 anzuordnen.

In den Fig. 4 bis 6 ist das Lichtleitelement, das aus einem lichtleitenden, massiven Körper, beispielsweise aus einem geeignetem Kunststoff, wie beispielsweise Makrolon, besteht, dargestellt. Im eingebautem Zustand des Lichtleitelements 5 besitzt dieses an seiner Rückseite eine streulichterzeugende Oberflächenstruktur 11, durch welche das an einem oder an beiden Enden eingekoppelte Licht aus dem Lichtleitelement nach außen tritt. Wie insbesondere aus Fig. 3 zu ersehen ist, trifft das über die Oberflächenstruktur 11 aus dem Lichtleitelement 5 austretende Licht auf eine an seiner Rückseite angebrachte Reflektorfläche 12 (Fig. 3, 3a), welche der länglichen Form des Lichtleitelementes 5 angepasst ist. Die Oberflächenstruktur 11 besteht aus quer zur Längsrichtung des Lichtleitelementes 5 verlaufenden, sägezahnförmigen Rippen, deren Profil vergrößert in der Fig. 6 dargestellt ist. Die Begrenzungsflächen der Rippen, welche zwischen den Rippen verlaufende Rillen begrenzen, schließen einen Winkel von 90° ein. Die Höhe der jeweiligen geradlinigen Rippen, welche die Dicke der Oberflächenstruktur 11 bilden, beträgt beim dargestellten Ausführungsbeispiel 0,45 mm. Abweichungen, beispielsweise von 0,3 mm bis 0,6 mm sind möglich. Die geradlinig verlaufenden Rippen bilden eine ebene Grundfläche der Oberflächenstruktur 11 an dem rückwärts gerichteten Mantelteil des Lichtleitelementes 5. Die Reflektorfläche 12, welche der Oberflächenstruktur 11 unmittelbar gegenüberliegt, umfasst das Lichtleitelement 5 in nur geringem Abstand, so dass über die gesamte Länge des Lichtleitelementes 5 hin eine homogene Lichtabstrahlung durch die Abdeckscheibe nach vorne (nach rechts in Fig. 3, 3a) erreicht wird. Durch diese Anordnung ist gewährleistet, dass von der Reflektorfläche 12 Licht in das Lichtleitelement zurückgerichtet wird und über einen nach vorne (in Fig. 3, 3a nach rechts) gerichteten freiliegenden Mantelteil 9 durch die Abdeckscheibe 13 ausgesendet wird Strahlengang "a". Der Mantelteil 9 weist eine im wesentlichen glatte Oberfläche auf.

Weiterhin wird durch die Reflektorfläche 12 Streulicht, Strahlengang "b", abgegeben das zusätzlich die Leuchtkraft der Anordnung erhöht. '

Zur Verbesserung der homogenen Abstrahlung besitzt die Oberflächenstruktur 11 eine sich ändernde Breite, wie es aus der Fig. 4 zu ersehen ist. Die Oberflächenstruktur 11 besitzt an dem Ende, welches der Lichteinkopplungsstelle (W) benachbart liegt, die geringste Breite. Die Breite der Oberflächenstruktur 11 vergrößert sich in Richtung zum anderen Ende des Lichtleiterelementes 5 hin, wie insbesondere aus Fig. 4 zu ersehen ist. Aufgrund der ebenen Grundfläche der Oberflächenstruktur 11 verringert sich der Querschnitt des Lichtleitelementes 5 ausgehend von dem der Lichteinkopplungsstelle W benachbarten Ende zum anderen Ende hin, wie aus Fig. 5 zu ersehen ist.

Wie aus Fig. 3 zu ersehen ist, wird das nach vorne vom Lichtleitelement 5 abgestrahlte Licht durch die mit den Scheinwerfern 2, 3 und 4 gemeinsame Abdeckscheibe 13 gestrahlt.

Wie aus Fig. 7 zu ersehen ist, wird die Lichtquelle 8, welche vorzugsweise als Leuchtdiode (LED) ausgebildet ist, im Abstand vom pyramiden- oder kegelförmig ausgebildeten Ende des Lichtleitelementes 5 angeordnet. Das von der Lichtquelle ausgesendete Licht wird über die pyramiden- oder kegelförmig ausgebildete Kopplungsfläche in das Lichtleitelement 5 eingekoppelt. Die Lichtquelle 8 kann auch in einer nicht näher dargestellten Reflektorfläche zur Erhöhung der eingekoppelten Lichtmenge angeordnet sein.

In bevorzugter Weise ist das Lichtleitelement 5 und die dazugehörige Lichtquelle 8 in einer Fassung 7, welche die Scheinwerfer 2, 3 und 4 und gegebenenfalls die Blinkeranordnung 6 flüssigkeitsdicht aufnimmt, eingebaut. Wie aus den Figuren zu ersehen ist, erreicht man hierdurch eine raumsparende und lichttechnisch optimale Anordnung der Beleuchtungseinrichtung.

### Bezugszeichenliste

- 1: Gehäuse
- 2, 3, 4: Scheinwerfer
- 5: Lichtleitelement
- 6: Blinker
- 7: Scheinwerferfassung
- 8: Lichtquelle
- 9: lichtaussendender Mantelteil
- 10: Strukturelemente
- 11: Oberflächenstruktur
- 12: Reflektorfläche
- 13, 14: Abdeckscheibe
- "a": Strahlengang
- "b": Strahlengang

## Patentansprüche

1. Beleuchtungseinrichtung für ein Fahrzeug, insbesondere Nutzfahrzeug, mit einem Gehäuse, dessen Lichtaustrittsöffnung von einer lichtdurchlässigen Abdeckscheibe verschlossen ist und in welchem wenigstens ein Scheinwerfer und wenigstens ein an eine Lichtquelle angekoppeltes, im wesentlichen stabförmiges Lichtleitelement angeordnet sind, wobei zumindest aus einem Teil der Mantelfläche des Lichtleitelementes Licht austritt, **dadurch gekennzeichnet, dass** das Lichtleitelement (5) bei im Fahrzeug verbautem Zustand in seiner Längsausdehnung im wesentlichen horizontal ober- oder unterhalb der in einer horizontalen Anordnung vorgesehenen Scheinwerfer (2, 3, 4) angeordnet ist.

2. Beleuchtungseinrichtung nach Anspruch 1, **dadurch gekennzeichnet, dass** das Lichtleitelement (5) zwischen den horizontal angeordneten Scheinwerfern (2, 3, 4) und dem sich horizontal erstreckenden Blinker (6) angeordnet ist.

3. Beleuchtungseinrichtung nach Anspruch 1 oder 2, **dadurch gekennzeichnet, dass** unter dem Lichtleitelement (5) ein Blinker (6) mit separater Abdeckscheibe (14) oder mit gleicher Abdeckscheibe (13) im Gehäuse (1) angeordnet ist.

4. Beleuchtungseinrichtung nach einem der Ansprüche 1 bis 3, **dadurch gekennzeichnet, dass** an einem oder an beiden Enden des stabförmigen Lichtleitelementes (5) eine Lichtquelle (8) oder Lichtquellen angekoppelt sind.

5. Beleuchtungseinrichtung nach einem der Ansprüche 1 bis 4, **dadurch gekennzeichnet, dass** das Lichtleitelement (5) zumindest an einem Mantelteil eine Streulicht erzeugende Oberflächenstruktur (11) aufweist.

6. Beleuchtungseinrichtung nach Anspruch 5, **dadurch gekennzeichnet, dass** die Oberflächenstruktur aus sägezahnförmigen Strukturelementen (10) besteht.

7. Beleuchtungseinrichtung nach Anspruch 5 oder 6, **dadurch gekennzeichnet, dass** die benachbarten Strukturflächen der Strukturelemente (10) einen Winkel von 90° aufweisen.

8. Beleuchtungseinrichtung nach einem der Ansprüche 5 bis 7, **dadurch gekennzeichnet, dass** die Oberflächenstruktur (11) eine Dicke von 0,3 bis 0,6 mm, insbesondere 0,45 mm aufweisen.

9. Beleuchtungseinrichtung nach einem der Ansprüche 5 bis 8, **dadurch gekennzeichnet, dass** die Oberflächenstruktur (11) eine eben ausgebildete Grundfläche am Lichtleitelement (5) hat.

10. Beleuchtungseinrichtung nach einem der Ansprüche 1 bis 9, **dadurch gekennzeichnet, dass** der die Oberflächenstruktur (11) aufweisende Mantelteil des Lichtleitelementes (5) gegen eine Reflektorfläche (12) gerichtet ist.

11. Beleuchtungseinrichtung nach einem der Ansprüche 5 bis 10, **dadurch gekennzeichnet, dass** die Breite der Oberflächenstruktur, ausgehend von dem der Lichtquelle (8) benachbarten Ende sich entlang der Längsausdehnung des Lichtleitelementes (5) vergrößert.

12. Beleuchtungsseinrichtung nach einem der Ansprüche 1 bis 11, **dadurch gekennzeichnet, dass** die Reflektorfläche (12) das Licht, welches über die an der Rückseite des Lichtleitelementes (5) angeordnete Oberflächenstruktur (11) gestrahlt wird, in das Lichtleitelement (5) zurückleitet und das zurückgeleitete Licht über eine Mantelfläche (9) an der Vorderseite des Lichtleitelementes (5) durch die Abdeckscheibe (13) ausgestrahlt wird.

13. Beleuchtungseinrichtung nach einem der Ansprüche 1 bis 12, **dadurch gekennzeichnet, dass** das Lichtleitelement (5) in einer auch die Scheinwerfer (2, 3, 4) aufnehmenden Fassung (7) befestigt ist.

14. Beleuchtungseinrichtung nach einem der Ansprüche 1 bis 13, **dadurch gekennzeichnet, dass** das Lichtleitelement (5) als massiver Leuchtstab ausgebildet ist.

15. Beleuchtungseinrichtung nach einem der Ansprüche 1 bis 14, **dadurch gekennzeichnet, dass** das Lichtleitelement (5) in der Frontbeleuchtung des Fahrzeugs eingebaut ist.

16. Beleuchtungseinrichtung nach einem der Ansprüche 1 bis 15, **dadurch gekennzeichnet, dass** das Lichtleitelement (5) ein Standlicht oder ein Begrenzungslicht bildet.
